# EUROPÄISCHE PATENTSCHRIFT

(11) **EP 3 691 928 B1**
(45) Veröffentlichungstag und Bekanntmachung des Hinweises auf die Patenterteilung: **01.12.2021**
(21) Anmeldenummer: 18783382.7
(22) Anmeldetag: 25.09.2018
(51) Int. Cl.: B60L 5/20

(54) **GLEITKONTAKTVORRICHTUNG UND VERFAHREN**
SLIDING CONTACT DEVICE AND METHOD
DISPOSITIF DE CONTACT COULISSANT ET PROCÉDÉ

(30) Priorität: 04.10.2017 DE 102017217638
(43) Veröffentlichungstag der Anmeldung: 12.08.2020
(73) Patentinhaber: Schunk Carbon Technology GmbH, 4822 Bad Goisern (AT)
(72) Erfinder: RASTL, Hans, 4822 Bad Goisern (AT); GADOCHA, Siegfried, 5360 St. Wolfgang (AT)
(74) Vertreter: advotec.
(86) Internationale Anmeldenummer: PCT/EP2018/075925
(87) Internationale Veröffentlichungsnummer: WO 2019/068512

(56) Entgegenhaltungen:
- EP-A2- 2 746 091
- DE-U1- 9 401 585
- DE-U1-202004 006 776
- US-A1- 2014 202 816

## Beschreibung

Die Erfindung betrifft eine Gleitkontaktvorrichtung sowie ein Verfahren zum Ableiten von Lichtbögen an einer Gleitkontaktvorrichtung, insbesondere für eine Stromversorgung von Fahrzeugen über einen Fahrdraht, wobei die Gleitkontaktvorrichtung eine Schleifleistenträgereinrichtung und eine daran angeordnete Schleifleiste umfasst.

Zur Stromversorgung von schienengebundenen, aber auch von nicht schienengebundenen, mit Elektromotoren betriebenen Fahrzeugen werden Gleitkontaktvorrichtungen verwendet, die eine Schleifleiste und eine Schleifleistenträgereinrichtung umfassen. Diese Gleitkontaktvorrichtungen werden mit einer Andruckvorrichtung bzw. einem Pantograph oder einer Schwinge unter Ausbildung einer Andruckkraft gegen einen Fahrstromleiter bzw. Fahrdraht gedrückt. Dadurch wird ein Gleitkontakt ausgebildet, wodurch eine Stromversorgung des Fahrzeugs während einer Fahrt ermöglicht wird.

Wesentlich dabei ist, dass auch während eines dynamischen Fahrbetriebs von derartigen Fahrzeugen eine möglichst kontinuierliche Aufrechterhaltung des Gleitkontakts zwischen der Schleifleiste und dem Fahrdraht gewährleistet ist. Es kann jedoch nicht immer ein ununterbrochener Kontakt zwischen der Schleifleiste und dem Fahrdraht sichergestellt werden. Insbesondere bei einer Bildung von Reif, Eis oder sonstigen Anhaftungen am Fahrdraht sind kurzzeitige Ablösungen der Schleifleiste vom Fahrdraht unvermeidlich. Unter anderem bedingt durch diese Ablösungen ist regelmäßig ein elektrischer Überschlag, bzw. eine Bildung eines Lichtbogens zwischen dem Fahrdraht und der Schleifleistenträgereinrichtung zu beobachten, welcher eine Beschädigung der Gleitkontaktvorrichtung zur Folge haben kann. Auch bereits beim bloßen Kontaktieren des Fahrdrahts mit der Schleifleiste können sich Lichtbögen ausbilden. Eine Ausbildung von Lichtbögen wird auch durch eine erhöhte Luftfeuchtigkeit im Bereich zwischen der Gleitkontaktvorrichtung und dem Fahrdraht begünstigt. Gerade die regelmäßig aus Metall ausgebildete Schleifleistenträgereinrichtung kann durch Lichtbögen stark beschädigt werden, wodurch verkürzte Inspektions- und Austauschintervalle erforderlich werden.

Die Schleifleistenträgereinrichtung ist häufig aus einem Aluminiumprofil mit einer U-förmigen Aufnahme für die aus Hartkohle bzw. Graphit bestehende Schleifleiste ausgebildet. Die Schleifleiste kann dabei mit dem Aluminiumprofil verklebt oder auch an der U-förmigen Aufnahme formschlüssig, durch Verbiegen von Schenkeln der U-förmigen Aufnahme, geklemmt sein. Bei der Ausbildung eines Lichtbogens zwischen dem Fahrdraht und der Schleifleistenträgereinrichtung kommt es zu einem Wärmeeintrag in die Schleifleistenträgereinrichtung und die Schleifleiste, wobei auch Material der Schleifleistenträgereinrichtung geschmolzen, verdampft oder abgelöst werden kann. Bei einer wiederholten Ausbildung von Lichtbögen kann die Schleifleistenträgereinrichtung daher stellenweise aufgezehrt und dadurch geschwächt bzw. die Schleifleiste in Folge von Wärmespannungen durch Bruch zerstört werden.

Aus der EP 2 746 091 B1 ist eine Gleitkontaktvorrichtung bekannt, die eine Bildung von Lichtbögen zwischen einer Schleifleistenträgereinrichtung und einem Fahrdraht verhindern soll. Insbesondere ist an der Schleifleistenträgereinrichtung ein Strömungskanal ausgebildet, der während einer Fahrt des Fahrzeugs eine gezielte Führung eines Luftstromes derart ermöglicht, dass ein Lichtbogen von der Schleifleistenträgereinrichtung auf die Schleifleiste umgelenkt wird. Nachteilig ist jedoch, dass es während eines Stehens oder bei geringen Geschwindigkeiten des Fahrzeugs mangels einer Luftströmung dennoch zu einem Überschlag des Lichtbogens zwischen Fahrdraht und Schleifleistenträgereinrichtung kommt. Gleichwohl ist es auch nicht immer möglich, mittels einer ausgebildeten Luftströmung einen derartigen Überschlag sicher zu verhindern. Darüber hinaus kommt es bei einer Ableitung des Lichtbogens über die Schleifleiste zu einer unerwünschten Erwärmung der Schleifleiste.

Der vorliegenden Erfindung liegt daher die Aufgabe zugrunde, eine Gleitkontaktvorrichtung sowie ein Verfahren zum Ableiten von Lichtbögen vorzuschlagen, mittels der bzw. dem eine Beschädigung einer Gleitkontaktvorrichtung durch Lichtbögen besser verhindert werden kann.

Diese Aufgabe wird durch eine Gleitkontaktvorrichtung mit den Merkmalen des Anspruchs 1 und ein Verfahren mit den Merkmalen des Anspruchs 17 gelöst.

Die erfindungsgemäße Gleitkontaktvorrichtung, insbesondere für eine Stromversorgung von Fahrzeugen über einen Fahrdraht, umfasst eine Schleifleistenträgereinrichtung und eine daran angeordnete Schleifleiste, wobei die Schleifleistenträgereinrichtung eine Fangeinrichtung für Lichtbögen aufweist, wobei die Fangeinrichtung an einer Längsseite eines Tragprofils der Schleifleistenträgereinrichtung angeordnet ist, wobei die Fangeinrichtung von mehreren entlang der Längsseite angeordneten Fangelementen ausgebildet ist.

Eine derartige Gleitkontaktvorrichtung kann mit einer aus Graphit bestehenden Schleifleiste an einem Pantographen oder einer Schwinge angebracht sein. Durch die Fangeinrichtung wird es dann möglich, zwischen der Gleitkontaktvorrichtung und den Fahrdraht überspringende Lichtbögen gezielt in die Fangeinrichtung einzuleiten. Ein Einschlag eines Lichtbogens in die Schleifleiste oder in ein die Schleifleiste halterndes Tragprofil der Schleifleistenträgereinrichtung kann so verhindert werden. Dadurch, dass die Fangeinrichtung an der Längsseite des Tragprofils angeordnet ist, kann unabhängig von einer Position des Fahrdrahts an oder benachbart der Gleitkontaktvorrichtung stets sichergestellt werden, dass auch bei einer außenmittigen Kontaktierung der Gleitkontaktvorrichtung mit dem Fahrdraht eine Ableitung eines Lichtbogens über die Fangeinrichtung möglich ist. Die Fangeinrichtung ist demnach in Art einer Blitzschutzanlage ausgebildet und stellt benachbart der Schleifleiste und dem Tragprofil einen definierten, niederohmigen oder auch gegenüber Lichtbögen resistenteren Strompfad zur Verfügung, derart, dass ein direkter Einschlag eines Lichtbogens in die Schleifleiste und/oder das Tragprofil verhindert werden kann. Da die Fangeinrichtung eine Mehrzahl von Fangelementen aufweist, die entlang der Längsseite des Tragprofils angeordnet bzw. ausgebildet sind, kommt es bei einer Zickzack-Bewegung des Fahrdrahtes an der Schleifleiste, wie sie bei einer Fahrt des Fahrzeugs stets auftritt, zu einem Auslöschen des Lichtbogens. Durch den Abstand der Fangelemente relativ zueinander wird der Lichtbogen bei einer Bewegung der Schleifleiste quer relativ zu dem Fahrdraht unterbrochen und damit ausgelöscht. Ein übermäßiger Wärmeeintrag oder ein Verzehr des Materials des Tragprofils durch Lichtbögen kann so während eines Stillstands oder einer Fahrt des Fahrzeugs und auch bei einer bloßen Kontaktierung eines Fahrdrahts mit der Gleitkontaktvorrichtung wirkungsvoll verhindert und damit eine Lebensdauer der Gleitkontaktvorrichtung verlängert werden.

Die Fangeinrichtung kann auf einer einer Fahrtrichtung abgewandten Längsseite und/oder einer der Fahrtrichtung zugewandten Längsseite der Schleifleistenträgereinrichtung angeordnet sein. Der Fahrdraht kann dann quer relativ zu der Gleitkontaktvorrichtung verlaufen, wobei dann je nach Fahrtrichtung des Fahrzeugs die Fangeinrichtung auf einer der Längsseiten oder beiden Längsseiten des Tragprofils der Schleifleistenträgereinrichtung angeordnet sein kann. Wenn die Fangeinrichtung an beiden Längsseiten angeordnet ist bzw. jede der Längsseiten eine Fangeinrichtung aufweist, kann eine kontrollierte Ableitung und Auslöschung eines Lichtbogens stets sichergestellt werden.

Vorteilhaft ist es, wenn die Fangeinrichtung an dem Tragprofil lösbar befestigt ist. Die Fangeinrichtung kann dann auswechselbar ausgebildet sein, sodass es möglich wird, die Fangeinrichtung bei einer Beschädigung durch Lichtbögen einfach zu ersetzen. Dann ist es auch nicht mehr erforderlich, die komplette Gleitkontaktvorrichtung auszutauschen, sondern die beschädigte Fangeinrichtung kann gegen eine neue Fangeinrichtung ersetzt werden, was eine Einsparung von Kosten ermöglicht.

Gleichwohl ist es möglich, dass das Tragprofil die Fangeinrichtung ausbildet. Bei den aus dem Stand der Technik bekannten Tragprofilen ist prinzipiell ein Überschlag eines Lichtbogens von einem Fahrdraht an jeder Stelle des Tragprofils möglich. Wenn das Tragprofil die Fangeinrichtung ausbildet, handelt es sich bei der Fangeinrichtung um einen vorspringenden Abschnitt des Tragprofils, welcher eine äußere Kontur des zur Halterung der Schleifleiste ausgebildeten Tragprofils derart überragt, dass prinzipbedingt ein Lichtbogen in die Fangeinrichtung einschlägt, sofern ein Lichtbogen auftritt. Die Fangeinrichtung kann dann auch so beschaffen sein, dass eine Beschädigung des Teils des Tragprofils, welcher zur Halterung der Schleifleiste dient, Lichtbögen verhindert wird.

Die Fangelemente können elektrisch leitend und voneinander beabstandet sein. Die Fangelemente können jeweils auch unterschiedlich ausgebildet sein, um einer Häufigkeit eines Einschlags eines Lichtbogens in dem Fangelement Rechnung zu tragen. Beispielsweise kann ein Fangelement in einem Mittenbereich der Längsseite länger ausgebildet sein als an einem äußeren Ende der Längsseite, da sich während eines Fahrbetriebs ein Fahrdraht häufiger in dem Mittenbereich befinden kann.

Das Fangelement kann aus Aluminium oder einer Aluminiumlegierung, Kohlenstofffasern, Stahl, Wolfram oder Hartkohle bestehen. Aluminium weist eine gute elektrische Leitfähigkeit und Wärmeleitung auf. Weiter ist Aluminium kostengünstig erhältlich und gut verarbeitbar. Wenn das Tragprofil ebenfalls aus Aluminium ausgebildet ist, kann das Fangelement einfach mit dem Tragprofil kombiniert werden. Alternativ kann das Fangelement aus Graphit, Kupfer etc. ausgebildet sein.

Das Fangelement kann als ein konsumierbares Fangelement ausgebildet sein. Durch einen wiederholten Einschlag von Lichtbögen kann dann das Material des Fangelements verdampft oder abgelöst werden, ohne dass es zu einer direkten Beschädigung des Tragprofils kommt. Erst nach einem vollständigen Aufbrauchen des Fangelements würde das Tragprofil dann durch Lichtbogeneinschläge beschädigt werden.

Vorteilhaft ist es, wenn das Fangelement angrenzend einer Oberkante des Tragprofils angeordnet ist. Das Fangelement ist dann so einerseits gut an dem Tragprofil befestigbar und andererseits möglichst dicht an einem Fahrdraht positioniert. Wie sich herausgestellt hat, schlagen Lichtbögen bevorzugt an einer Oberkante eines Tragprofils ein, sodass hier dann ein kontrollierter Einschlag eines Lichtbogens in das Fangelement erfolgen kann.

Auch ist es besonders vorteilhaft, wenn das Fangelement relativ zu der Längsseite des Tragprofils auskragend angeordnet ist. So kann das Fangelement an der Längsseite in Fahrtrichtung bzw. entgegengesetzt der Fahrtrichtung hervorspringen bzw. hervorstehen. Das Fangelement kann dann in der gleichen Richtung wie der Fahrdraht orientiert sein.

Weiter kann das Fangelement in Richtung zu der Schleifleiste hin geneigt angeordnet sein. Das Fangelement kann dann relativ zu einer horizontalen Ebene mit einem äußeren Ende nach oben hin geneigt an dem Tragprofil positioniert sein. Eine Strecke zwischen dem Fangelement und dem Fahrdraht wird so verkürzt, wodurch auf jeden Fall sichergestellt werden kann, dass ein Lichtbogen stets in das Fangelement einschlägt.

Weiter kann das Fangelement auch in Richtung von der Schleifleiste weg geneigt angeordnet sein. Das Fangelement kann dann mit einem äußeren Ende relativ zu einer horizontalen Ebene in einem Winkel nach unten hin geneigt an dem Tragprofil angeordnet sein. So wird es auch möglich, Lichtbögen, die aufgrund von Feuchtigkeit oder Anhaftungen von Eis an anderen Stellen des Tragprofils einschlagen können, sicher abzuleiten. Insbesondere, wenn die Fangeinrichtung aus einer Mehrzahl von Fangelementen ausgebildet ist, können diese sowohl von dem Schleifstück weg als auch zu dem Schleifstück hin geneigt, beispielsweise in einem regelmäßigen Wechsel, angeordnet sein.

Die Fangeinrichtung kann ein Profilelement aufweisen, welches entlang der Längsseite verläuft, und ein relativ zu der Längsseite auskragender Schenkel des Profilelements sein kann. Beispielsweise kann das Profilelement im Querschnitt L-förmig ausgebildet sein und die Fangelemente ausbilden, sodass dann ein Schenkel des Profilelements an der Längsseite anliegt, und ein weiterer Schenkel des Profilelements an der Längsseite vorspringt bzw. auskragt. Dieses Profilelement kann einfach mit dem Tragprofil durch beispielsweise Schrauben oder Nieten verbunden sein. Der auskragende Schenkel des Profilelements kann entlang eines Teils der Längsseite oder entlang der gesamten Längsseite verlaufen. Eine Länge des Profilelements kann so bemessen sein, dass eine Zone von häufigen Einschlägen von Lichtbögen durch das Profilelement abgedeckt ist.

Weiter kann vorgesehen sein, dass der auskragende Schenkel eine regelmäßige Zahnung aufweist und die Zahnung die Fangelemente ausbildet. So kann dann sichergestellt werden, dass ein Lichtbogen stets in einen Zahn des Schenkels einschlägt und nicht an einer anderen beliebigen Stelle. Die jeweiligen Zähne können eine spitze, runde oder rechteckige Form ausbilden. Auch kann eine Länge der Zähne variieren.

Die Fangeinrichtung kann von mehreren regelmäßig oder unregelmäßig entlang der Längsseite angeordneten, relativ zu der Längsseite auskragenden Fangelementen ausgebildet sein. Bei den Fangelementen kann es sich um einzelne Bauteile handeln, die unabhängig voneinander an der Längsseite befestigt sein können. So wird es dann auch möglich, die Fangelemente jeweils in Abhängigkeit ihres Verschleißzustandes auszutauschen. Beispielsweise können die Fangelemente in einen Abstand von wenigen Zentimetern relativ zueinander entlang der Längsseite angeordnet sein. Der Abstand der Fangelemente kann einfach nach EN 62305, nach der zuletzt vor dem Prioritätstag gültigen Fassung, entsprechend der gewünschten Blitzschutzklasse berechnet werden, insbesondere, wenn ein elektrisches Feld durch die definierte Spannung des Fahrdrahtes bekannt ist.

In einer besonders einfachen Ausführungsform kann das Fangelement von einem Stab ausgebildet sein. Der Stab kann beispielsweise in eine Bohrung in dem Tragprofil eingesetzt oder in das Tragprofil eingeschraubt sein. Eine Vielzahl von Stäben entlang der jeweiligen Längsseite des Tragprofils kann dann die Fangeinrichtung ausbilden. Besonders vorteilhaft ist hier, dass ein aerodynamisches Verhalten der Gleitkontaktvorrichtung bei hohen Fahrgeschwindigkeiten von den verwendeten Stäben kaum negativ beeinflusst wird.

In einer weiteren Ausführungsform kann die Fangeinrichtung ein Profilelement aufweisen, welches entlang der Längsseite verlaufen kann, wobei an dem Profilelement mehrere regelmäßig entlang der Längsseite angeordnete und an dem Profilelement auskragende Stäbe angeordnet sein können, die jeweils ein Fangelement ausbilden. Im Unterschied zur zuvor beschriebenen Ausführungsform sind dann die Stäbe nicht direkt an dem Tragprofil angeordnet, sondern an dem Profilelement, welches seinerseits mit dem Tragprofil verbunden ist. Durch das Profilelement wird es möglich, bei einem Verschließ der Stäbe durch Materialabtrag in Folge von Lichtbogeneinschlag sämtliche Stäbe an einer Längsseite schnell auszutauschen. Das Profilelement kann einfach streifenförmig ausgebildet sein und an der Längsseite des Tragprofils direkt anliegen. So sind auch eine gute Wärmeableitung sowie ein guter Stromübergang zwischen dem Profilelement und dem Tragprofil sichergestellt. Weiter können konventionelle Gleitkontaktvorrichtungen einfach mit einer derartigen Fangvorrichtung nachgerüstet werden.

Bei dem erfindungsgemäßen Verfahren zum Ableiten von Lichtbögen an einer Gleitkontaktvorrichtung, insbesondere für eine Stromversorgung von Fahrzeugen über einen Fahrdraht, wird eine Schleifleistenträgereinrichtung mit einer darin angeordneten Schleifleiste der Gleitkontaktvorrichtung mit einem Fahrdraht kontaktiert, wobei ein Lichtbogen zwischen dem Fahrdraht und der Gleitkontaktvorrichtung ausgebildet wird, wobei der Lichtbogen die Gleitkontaktvorrichtung an einer an einer Längsseite eines Tragprofils der Schleifleistenträgereinrichtung angeordneten, von mehreren entlang der Längsseite angeordneten Fangelementen ausgebildeten Fangeinrichtung der Schleifleistenträgereinrichtung kontaktiert. Hinsichtlich der Vorteile des erfindungsgemäßen Verfahrens wird auf die Vorteilsbeschreibung der erfindungsgemäßen Gleitkontaktvorrichtung verwiesen. Weitere vorteilhafte Ausführungsformen des Verfahrens ergeben sich aus den Merkmalsbeschreibungen der auf den Vorrichtungsanspruch 1 rückbezogenen Unteransprüche.

Im Folgenden wird die Erfindung unter Bezugnahme auf die beigefügten Zeichnungen näher erläutert.

Es zeigen:
- **Fig. 1**: eine Gleitkontaktvorrichtung nach dem Stand der Technik in einer Querschnittansicht;
- **Fig. 2**: eine erste Ausführungsform einer Gleitkontaktvorrichtung in einer Querschnittansicht;
- **Fig. 3**: eine perspektivische Ansicht der Gleitkontaktvorrichtung aus **Fig. 2****;**
- **Fig. 4**: eine zweite Ausführungsform einer Gleitkontaktvorrichtung in einer perspektivischen Ansicht;
- **Fig. 5**: eine dritte Ausführungsform einer Gleitkontaktvorrichtung in einer Querschnittansicht;
- **Fig. 6**: eine perspektivische Ansicht der Gleitkontaktvorrichtung aus **Fig. 5****;**
- **Fig. 7**: eine vierte Ausführungsform einer Gleitkontaktvorrichtung in einer Querschnittansicht;
- **Fig. 8**: eine perspektivische Ansicht der Gleitkontaktvorrichtung aus **Fig. 7****.**

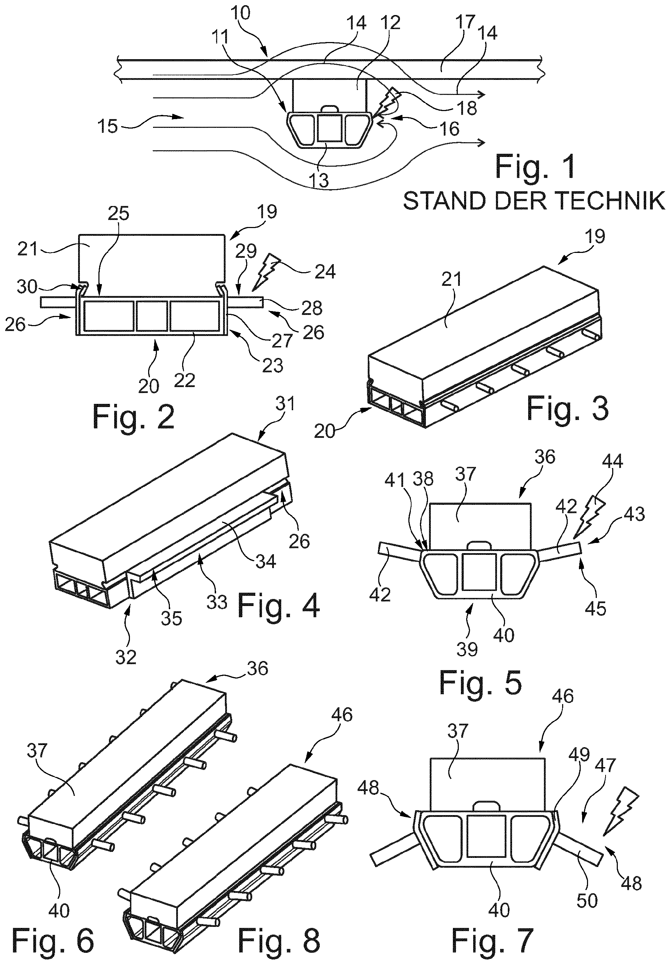

Die **Fig. 1** zeigt eine Gleitkontaktvorrichtung 10 nach dem Stand der Technik in einer Querschnittansicht, umfassend eine Schleifleistenträgereinrichtung 11 und eine Schleifleiste 12, die auf einem Tragprofil 13 der Schleifleistenträgereinrichtung 11 angeordnet und befestigt ist. Wie hier mit Linien 14 angedeutet, wird während einer Fahrt eines hier nicht dargestellten Fahrzeugs die Gleitkontaktvorrichtung 10 von einer Luftströmung 15 umströmt, die an einer Längsseite 16 der Gleitkontaktvorrichtung 10 verwirbelt. Zwischen einem Fahrdraht 17, der quer zu der Gleitkontaktvorrichtung 10 verläuft und mit dieser kontaktiert ist, und dem Tragprofil 13 ist ein Lichtbogen 18 ausgebildet. Durch den Lichtbogen 18 an dem Tragprofil 13 kommt es zu einer Ablösung eines Materials des Tragprofils 13 sowie zu einer punktuellen Erwärmung desselben.

Eine Zusammenschau der **Fig. 2** und **3** zeigt eine erste Ausführungsform einer Gleitkontaktvorrichtung 19 mit einer Schleifleistenträgereinrichtung 20 und einer daran angeordneten Schleifleiste 21. Die Schleifleistenträgereinrichtung 20 ist aus einem Tragprofil 22 ausgebildet und umfasst eine Fangeinrichtung 23 zum Fangen und Ableiten von Lichtbögen 24. Die Schleifleiste 21 besteht aus Graphit und ist in eine trapezförmige Aufnahmenut 25 des Tragprofils 22 aus Aluminium eingesetzt. An Längsseiten 26 des Tragprofils 22 sind jeweils Profilelemente 27 mit einer Anzahl regelmäßig entlang der jeweiligen Längsseite 26 angeordneten Stäben 28 ausgebildet. Die Stäbe 28 bilden hier Fangelemente 29 der Fangeinrichtung 23 aus. Die Profilelemente 27 und die Stäbe 28 bestehen aus Aluminium und können bei Bedarf einfach nach einem Verbrauch der Stäbe 28 durch Lichtbögen 24 an den Längsseiten 26 ausgetauscht werden. Insbesondere sind die Stäbe 28 an eine Oberkante 30 des Tragprofils 22 angrenzend positioniert.

Die **Fig. 4** zeigt eine zweite Ausführungsform einer Gleitkontaktvorrichtung 31, bei der im Unterschied zur Gleitkontaktvorrichtung aus **Fig. 2** eine Fangeinrichtung 32 alleine aus einem Profilelement 33 ausgebildet ist. Das Profilelement 33 weist einen relativ zu der Längsseite 26 auskragenden Schenkel 34 auf, der hier als Zahnung ausgebildete Fangelemente 35 ausbildet.

Eine Zusammenschau der **Fig. 5** und **6** zeigt eine Gleitkontaktvorrichtung 36, bei der eine Schleifleiste 37 aus Graphit auf einer Oberseite 38 einer Schleifleistenträgereinrichtung 39 bzw. deren Tragprofil 40 durch beispielsweise Kleben befestigt ist. Benachbart einer Oberkante 41 des Tragprofils 40 sind hier Stäbe 42 direkt an dem Tragprofil 40 befestigt, wobei die Stäbe 42 zusammen eine Fangeinrichtung 43 für Lichtbögen 44 ausbilden. Insbesondere sind die Stäbe 42 in Richtung zu der Schleifleiste 37 hin mit einem distalen Ende 45 geneigt.

Die **Fig. 7** und **8** zeigen eine Gleitkontaktvorrichtung 46, bei der im Unterschied zu der Gleitkontaktvorrichtung aus **Fig. 5** eine Fangeinrichtung 47 an den Längsseiten 48 des Tragprofils 40 angeordnet ist, die aus Profilelementen 49 mit daran in regelmäßigen Abständen angeordneten Stäben 50 ausgebildet ist. Insbesondere sind hier die Stäbe 50 in Richtung von der Schleifleiste 37 weg geneigt an dem Tragprofil 40 bzw. dem Profilelement 49 angeordnet.

## Patentansprüche

1. Gleitkontaktvorrichtung (19, 31, 36, 46), insbesondere für eine Stromversorgung von Fahrzeugen über einen Fahrdraht, wobei die Gleitkontaktvorrichtung eine Schleifleistenträgereinrichtung (20, 39) und eine daran angeordnete Schleifleiste (21, 37) umfasst,
**dadurch gekennzeichnet,**
**dass** die Schleifleistenträgereinrichtung eine Fangeinrichtung (23, 32, 43, 47) für Lichtbögen (24, 44) aufweist, wobei die Fangeinrichtung an einer Längsseite (26, 48) eines Tragprofils (22, 40) der Schleifleistenträgereinrichtung angeordnet ist, und wobei die Fangeinrichtung (23, 43, 47) von mehreren entlang der Längsseite angeordneten Fangelementen (29) ausgebildet ist.

2. Gleitkontaktvorrichtung nach Anspruch 1,
**dadurch gekennzeichnet,**
**dass** die Fangeinrichtung (23, 32, 43, 47) auf der einer Fahrtrichtung abgewandten Längsseite (26, 48) und/oder einer der Fahrtrichtung zugewandten Längsseite (26, 48) der Schleifleistenträgereinrichtung (20, 39) angeordnet ist.

3. Gleitkontaktvorrichtung nach Anspruch 1 oder 2,
**dadurch gekennzeichnet,**
**dass** die Fangeinrichtung (23, 32, 43, 47) an dem Tragprofil (22, 40) lösbar befestigt ist.

4. Gleitkontaktvorrichtung nach Anspruch 1 oder 2,
**dadurch gekennzeichnet,**
**dass** das Tragprofil die Fangeinrichtung ausbildet.

5. Gleitkontaktvorrichtung nach einem der vorangehenden Ansprüche,
**dadurch gekennzeichnet,**
**dass** die Fangelemente (29, 35) elektrisch leitend und voneinander beabstandet sind.

6. Gleitkontaktvorrichtung nach einem der vorangehenden Ansprüche,
**dadurch gekennzeichnet,**
**dass** das Fangelement (29, 35) aus Aluminium oder einer Aluminiumlegierung, Kohlenstofffasern, Stahl, Wolfram oder Hartkohle besteht.

7. Gleitkontaktvorrichtung nach einem der vorangehenden Ansprüche,
**dadurch gekennzeichnet,**
**dass** das Fangelement (29, 35) als ein konsumierbares Fangelement ausgebildet ist.

8. Gleitkontaktvorrichtung nach einem der vorangehenden Ansprüche,
**dadurch gekennzeichnet,**
**dass** das Fangelement (29, 35) angrenzend einer Oberkante (30, 41) des Tragprofils (22, 40) angeordnet ist.

9. Gleitkontaktvorrichtung nach einem der vorangehenden Ansprüche,
**dadurch gekennzeichnet,**
**dass** das Fangelement (29, 35) relativ zu der Längsseite (26, 48) des Tragprofils (22, 40) auskragend angeordnet ist.

10. Gleitkontaktvorrichtung nach einem der vorangehenden Ansprüche,
**dadurch gekennzeichnet,**
**dass** das Fangelement in Richtung zu der Schleifleiste (21, 37) hin geneigt angeordnet ist.

11. Gleitkontaktvorrichtung nach einem der vorangehenden Ansprüche,
**dadurch gekennzeichnet,**
**dass** das Fangelement in Richtung von der Schleifleiste (21, 37) weg geneigt angeordnet ist.

12. Gleitkontaktvorrichtung nach einem der vorangehenden Ansprüche,
**dadurch gekennzeichnet,**
**dass** die Fangeinrichtung (32) ein Profilelement (33) aufweist, welches entlang der Längsseite (26) verläuft, und ein relativ zu der Längsseite auskragender Schenkel (34) des Profilelements ist.

13. Gleitkontaktvorrichtung nach Anspruch 12,
**dadurch gekennzeichnet,**
**dass** der auskragende Schenkel (34) eine Zahnung aufweist und die Zahnung die Fangelemente ausbildet.

14. Gleitkontaktvorrichtung nach einem der vorangehenden Ansprüche,
**dadurch gekennzeichnet,**
**dass** die Fangeinrichtung (23, 43, 47) von mehreren regelmäßig oder unregelmäßig entlang der Längsseite (26, 48) angeordneten und relativ zu der Längsseite auskragenden Fangelementen (29) ausgebildet ist.

15. Gleitkontaktvorrichtung nach Anspruch 14,
**dadurch gekennzeichnet,**
**dass** das Fangelement (29) von einem Stab (28, 50) ausgebildet ist.

16. Gleitkontaktvorrichtung nach einem der Ansprüche 5 bis 11,
**dadurch gekennzeichnet,**
**dass** die Fangeinrichtung (23, 43, 47) ein Profilelement (27, 49) aufweist, welches entlang der Längsseite (26, 48) verläuft, wobei an dem Profilelement mehrere regelmäßig entlang der Längsseite angeordnete und an dem Profilelement auskragende Stäbe (28, 42, 50) angeordnet sind, die jeweils ein Fangelement (29) ausbilden.

17. Verfahren zum Ableiten von Lichtbögen (24, 44) an einer Gleitkontaktvorrichtung (19, 31, 36, 46), für eine Stromversorgung von Fahrzeugen über einen Fahrdraht, wobei eine Schleifleistenträgereinrichtung (20, 39) mit einer daran angeordneten Schleifleiste (21, 37) der Gleitkontaktvorrichtung mit einem Fahrdraht kontaktiert wird,
**dadurch gekennzeichnet,**
**dass** ein Lichtbogen 24, 44) zwischen dem Fahrdraht und der Gleitkontaktvorrichtung ausgebildet wird, wobei der Lichtbogen die Gleitkontaktvorrichtung an einer an einer Längsseite (26, 48) eines Tragprofils (22, 40) der Schleifleistenträgereinrichtung angeordneten, von mehreren entlang der Längsseite angeordneten Fangelementen (29) ausgebildeten Fangeinrichtung (23, 32, 43, 47) der Schleifleistenträgereinrichtung kontaktiert.

## Claims

1. A sliding contact device (19, 31, 36, 46), in particular for supplying power to vehicles via an overhead wire, the sliding contact device comprising a contact-strip carrier device (20, 39) and a contact strip (21, 37) disposed thereon,
**characterized in that**
the contact-strip carrier device comprises a lightning protection device (23, 32, 43, 47) for electric arcs (24, 44), the lightning protection device being disposed on a long side (26, 48) of a carrier profile (22, 40) of the contact-strip carrier device, the lightning protection device (23, 43, 47) being formed from several lightning protection elements (29) disposed along the long side.

2. The sliding contact device according to claim 1,
**characterized in that**
the lightning protection device (23, 32, 43, 47) is disposed on the long side (26, 48) of the contact-strip carrier device (20, 39) facing away from the direction of travel and/or on a long side (26, 48) of the contact-strip carrier device (20, 39) facing the direction of travel.

3. The sliding contact device according to claim 1 or 2,
**characterized in that**
the lightning protection device (23, 32, 43, 47) is detachably fastened to the carrier profile (22, 40).

4. The sliding contact device according to claim 1 or 2,
**characterized in that**
the carrier profile forms the lightning protection device.

5. The sliding contact device according to any one of the preceding claims,
**characterized in that**
the lightning protection elements (29, 35) are electrically conductive and spaced apart from each other.

6. The sliding contact device according to any one of the preceding claims,
**characterized in that**
the lightning protection element (29, 35) is made of aluminum or an aluminum alloy, carbon fibers, steel, tungsten or hard coal.

7. The sliding contact device according to any one of the preceding claims,
**characterized in that**
the lightning protection element (29, 35) is realized as a consumable lightning protection element.

8. The sliding contact device according to any one of the preceding claims,
**characterized in that**
the lightning protection element (29, 35) is adjacent to an upper edge (30, 41) of the carrier profile (22, 40).

9. The sliding contact device according to any one of the preceding claims,
**characterized in that**
the lightning protection element (29, 35) projects over the long side (26, 48) of the carrier profile (22, 40).

10. The sliding contact device according to any one of the preceding claims,
**characterized in that**
the lightning protection element is inclined toward the contact strip (21, 37).

11. The sliding contact device according to any one of the preceding claims,
**characterized in that**
the lightning protection element is inclined away from the contact strip (21, 37).

12. The sliding contact device according to any one of the preceding claims,
**characterized in that**
the lightning protection device (32) has a profile element (33) which extends along the long side (26) and is a leg (34) of the profile element projecting over the long side.

13. The sliding contact device according to claim 12,
**characterized in that**
the projecting leg (34) has a toothing which forms the lightning protection elements.

14. The sliding contact device according to any one of the preceding claims,
**characterized in that**
the lightning protection device (23, 43, 47) is formed from several lightning protection elements (29) distributed evenly or unevenly along the long side (26, 48) and projecting over the long side.

15. The sliding contact device according to claim 14,
**characterized in that**
the lightning protection element (29) is realized by a rod (28, 50).

16. The sliding contact device according to any one of the claims 5 to 11,
**characterized in that**
the lightning protection device (23, 43, 47) has a profile element (27, 49) which extends along the long side (26, 48), several rods (28, 42, 50), which are evenly distributed along the long side and project over the profile element, being disposed on the profile element and each forming a lightning protection element (29).

17. A method for discharging electric arcs (24, 44) on a sliding contact device (19, 31, 36, 46) for supplying power to vehicles via an overhead wire, a contact-strip carrier device (20, 39) having a contact strip (21, 37) of the sliding contact device disposed thereon being contacted with an overhead wire,
**characterized in that**
an electric arc (24, 44) starts between the overhead wire and the sliding contact device, the electric arc contacting the sliding contact device at a lightning protection device (23, 32, 43, 47) of the contact-strip carrier device, the lightning protection device being disposed on a long side (26, 48) of a carrier profile (22, 40) of the contact-strip carrier device and being realized from several lightning protection elements (29) disposed along the long side.

## Revendications

1. Dispositif de contact glissant (19, 31, 36, 46), notamment pour un approvisionnement en énergie des véhicules par une caténaire, le dispositif de contact glissant comprenant un dispositif de support de bande de frottement (20, 39) et une bande de frottement (21, 37) disposée sur lequel,
**caractérisé en ce que**
le dispositif de support de bande de frottement comprend un dispositif pour la protection contre la foudre (23, 32, 43, 47) pour des arcs électriques (24, 44), le dispositif pour la protection contre la foudre étant disposé sur une côté long (26, 48) d'un profile de support (22, 40) du dispositif de support de bande de frottement, et le dispositif pour la protection contre la foudre (23, 43, 47) étant réalisé par plusieurs éléments pour la protection contre la foudre (29) disposé le long du côté long.

2. Dispositif de contact glissant selon la revendication 1,
**caractérisé en ce que**
le dispositif pour la protection contre la foudre (23, 32, 43, 47) est disposé sur le côté long (26, 48) du dispositif de support de bande de frottement (20, 39) tourné le dos au sens de la marche et/ou sur un côté long (26, 48) du dispositif de support de bande de frottement (20, 39) orienté vers le sens de la marche.

3. Dispositif de contact glissant selon la revendication 1 ou 2,
**caractérisé en ce que**
le dispositif pour la protection contre la foudre (23, 32, 43, 47) est fixé de manière détachable au profile de support (22, 40).

4. Dispositif de contact glissant selon la revendication 1 ou 2,
**caractérisé en ce que**
le profile de support forme le dispositif pour la protection contre la foudre.

5. Dispositif de contact glissant selon l'une quelconque des revendications précédentes,
**caractérisé en ce que**
les éléments pour la protection contre la foudre (29, 35) sont conducteurs et espacés l'un de l'autre.

6. Dispositif de contact glissant selon l'une quelconque des revendications précédentes,
**caractérisé en ce que**
l'élément pour la protection contre la foudre (29, 35) est fait en aluminium ou en alliage d'aluminium, en fibres de carbone, en acier, en tungstène ou en houille.

7. Dispositif de contact glissant selon l'une quelconque des revendications précédentes,
**caractérisé en ce que**
l'élément pour la protection contre la foudre (29, 35) est réalisé comme élément consumable pour la protection contre la foudre.

8. Dispositif de contact glissant selon l'une quelconque des revendications précédentes,
**caractérisé en ce que**
l'élément pour la protection contre la foudre (29, 35) est adjacent à un bord supérieure (30, 41) du profile de support (22, 40).

9. Dispositif de contact glissant selon l'une quelconque des revendications précédentes,
**caractérisé en ce que**
l'élément pour la protection contre la foudre (29, 35) fait saillie sur le côté long (26, 48) du profile de support (22, 40).

10. Dispositif de contact glissant selon l'une quelconque des revendications précédentes,
**caractérisé en ce que**
l'élément pour la protection contre la foudre est incliné vers la bande de frottement (21, 37).

11. Dispositif de contact glissant selon l'une quelconque des revendications précédentes,
**caractérisé en ce que**
l'élément pour la protection contre la foudre est incliné vers l'extérieure de la bande de frottement (21, 37).

12. Dispositif de contact glissant selon l'une quelconque des revendications précédentes,
**caractérisé en ce que**
le dispositif pour la protection contre la foudre (32) a un élément de profile (33) qui s'étend le long du côté long (26) et est un bras (34) de l'élément de profile faisant saillie sur le côté long.

13. Dispositif de contact glissant selon la revendication 12,
**caractérisé en ce que**
le bras (34) faisant saillie a une denture qui forme les éléments pour la protection contre la foudre.

14. Dispositif de contact glissant selon l'une quelconque des revendications précédentes,
**caractérisé en ce que**
le dispositif pour la protection contre la foudre (23, 43, 47) est formé de plusieurs éléments pour la protection contre la foudre (29) espacés régulièrement ou irrégulièrement le long du côté long (26, 48) et faisant saillie sur le côté long.

15. Dispositif de contact glissant selon la revendication 14,
**caractérisé en ce que**
l'élément pour la protection contre la foudre (29) est réalisé d'un bâton (28, 50).

16. Dispositif de contact glissant selon l'une quelconque des revendications 5 à 11,
**caractérisé en ce que**
le dispositif pour la protection contre la foudre (23, 43, 47) a un élément de profile (27, 49) qui s'étend le long du côté long (26, 48), plusieurs bâtons (28, 42, 50), qui sont espacés régulièrement le long du côté long et fait saillie sur l'élément de profile, étant disposés sur l'élément de profile et chacun formant un élément pour la protection contre la foudre (29).

17. Procédé pour décharger des arcs électriques (24, 44) sur un dispositif de contact glissant (19, 31, 36, 46) pour un approvisionnement en énergie des véhicules par une caténaire, un dispositif de support de bande de frottement (20, 39) ayant une bande de frottement (21, 37) du dispositif de contact glissant disposée sur lequel étant contacté électriquement avec une caténaire,
**caractérisé en ce**
**qu'**un arc électrique (24, 44) commence entre la caténaire et le dispositif de contact glissant, l'arc électrique contactant électriquement le dispositif de contact glissant à un dispositif pour la protection contre la foudre (23, 32, 43, 47) du dispositif de support de bande de frottement, le dispositif pour la protection contre la foudre étant disposé sur un côté long (26, 48) d'un profile de support (22, 40) du dispositif de support de bande de frottement et étant réalisé de plusieurs éléments pour la protection contre la foudre (29) disposés le long du côté long.
